# EUROPEAN PATENT SPECIFICATION

(11) **EP 2 191 649 B1**
(45) Date of publication and mention of the grant of the patent: **30.01.2013**
(21) Application number: 08799240.0
(22) Date of filing: 05.09.2008
(51) Int. Cl.: H04N 7/24

(54) **SYSTEMS AND METHODS FOR MANAGING PARENTAL CONTROL SETTINGS AND INFORMATION IN MULTIPLE ENTERTAINMENT DEVICES**
SYSTEME UND VERFAHREN ZUR VERWALTUNG VON KINDERSICHERUNGSEINSTELLUNGEN UND INFORMATIONEN IN MEHREREN UNTERHALTUNGSGERÄTEN
SYSTÈMES ET PROCÉDÉS POUR GÉRER DES PARAMÈTRES DE CONTRÔLE PARENTAL ET DES INFORMATIONS DANS DE MULTIPLES DISPOSITIFS DE DIVERTISSEMENT

(30) Priority: 24.09.2007 US 860290; 28.09.2007 US 863614
(43) Date of publication of application: 02.06.2010
(73) Proprietor: Echostar Technologies L.L.C., Englewood, CO 80112 (US)
(72) Inventor: CARD, John, Anthony, II, Denver Colorado 80202 (US)
(74) Representative: Needle, Jacqueline
(86) International application number: PCT/US2008/075404
(87) International publication number: WO 2009/042373

(56) References cited:
- EP-A- 1 213 919
- WO-A-2004/098190
- US-A1- 2004 215 813

## Description

The present invention relates to systems and methods for managing parental control settings and information in multiple entertainment devices.

It is not uncommon for a household to include a large number of televisions, digital video recorders, set-top boxes, MP3 players, and other such entertainment devices distributed throughout the home. Furthermore, such environments increasingly include some form of data communication network, such as a WiFi network, which may facilitate communication among two or more of the entertainment devices.

At the same time, there has been increasing concern regarding the nature of programming and other content available to children using such entertainment devices. This has prompted, for example, the U.S. congress to promulgate certain laws and standards intended to provide technological features (e.g., the "V-chip") providing parents the option of blocking the display of violent, sexual, or other content that they believe is harmful to their children. As with similar measures in other countries, the V-chip system works by utilizing a set of parental control settings within the television such that content is blocked based upon a content rating system -- e.g., the rating system established by the Federal Communications Commission FCC 98-36, which sets forth categories "TV-Y," "TV-Y7," "TV-Y7-FV," "TV-G," "TV-PG," "TV-14," and "TV-MA."

While a user may configure one television in the house with the desired parental settings (for example, a television in the family room), the remaining televisions (e.g., in one or more bedrooms) may not be similarly configured, and thus provide a method for children to intentionally or unintentionally access inappropriate programming. At the same time, it is often desirable to temporarily unblock certain settings and/or change the security mechanism for a particular device or group of devices.

EP-A-1213919 describes a program guide system that allows a user to adjust the user settings of a plurality of program guides at different locations within a household from a single location, and to apply the same settings to all program guides in the household.

WO-A-2004/09819 describes a multi-room interactive network guide which resides on a primary device and allows a user to monitor the activities of a plurality of networked devices and to control the viewing choices of the networked devices.

US-A-2004/0215813 describes the control of access to the signals transmitted within a heterogeneous network. The main user of the home audiovisual network defines a set of access levels associated with time slots. This enables parents to control when their children watch television.

The present invention seeks to provide methods and systems for managing parent control information between multiple entertainment devices.

According to a first aspect of the present invention there is provided a method for managing parental control information in a first entertainment device which is in communication with a second entertainment device by way of a local area network, wherein the first entertainment device has a first set of parental control settings locally stored therein, and the second entertainment device has a second set of parental control settings locally stored therein, and wherein to enable the first set of parental control settings of the first entertainment device to more closely match the second set of parental control settings of the second entertainment device the method comprises:
on receiving a parental control modification command from one of the second or first entertainment devices via the local area network;
causing the other of the first or second entertainment devices to invoke a security mechanism in response to the parental control modification command whereby the parental control modification command is authenticated or unauthenticated; and
if the parental control modification command is authenticated, causing the other of the entertainment devices to modify the locally stored set of parental control settings to be substantially equivalent to the set of parental control settings locally stored by the one of the entertainment devices.

Methods in accordance with various embodiments allow parental control settings and information to be managed between multiple entertainment devices, such as digital televisions (DTVs).

The present invention also extends to a system for managing parental control information comprising:
a first entertainment device having a first set of parental control settings locally stored therein which are arranged to selectively block content; and
a second entertainment device having a second set of parental control settings locally stored therein which are arranged to selectively block content;
the first and second entertainment devices being in communication by way of a local area network;
wherein, the system is arranged to enable the first set of parental control settings of the first entertainment device and the second set of parental control settings of the second entertainment device to be more closely matched;
wherein, on receiving a parental control modification command from one of the second or first entertainment devices via the local area network, the other of the second or first entertainment devices is caused to invoke a security mechanism in response to which the parental control modification command is authenticated or unauthenticated; and
wherein, if the parental control modification command is authenticated, the other of the entertainment devices modifies the locally stored set of parental control settings to be substantially equivalent to the set of parental control settings locally stored by the one of the entertainment devices.

The first entertainment device may be configured to selectively block content based on a first set of parental control settings, and the second entertainment device may be configured to selectively block content based on a second set of parental control settings.

In an embodiment, the first entertainment device is configured to transmit the first set of parental control settings to the second entertainment device, and the second entertainment device is configured to receive the first set of parental control settings and to modify the second set of parental control settings such that they are substantially equivalent to the first set of parental control settings.

A digital television (DTV) may be configured to selectively block content based on a first set of parental control settings stored therein. The DTV is configured to transmit, in response to a first user request, the first set of parental control settings to a second DTV. The DTV is further configured to receive, in response to a second user request, a second set of parental control settings from the second DTV and to modify the second set of parental control settings such that the first set of parental control settings is substantially equivalent to the second set of parental control settings.

In an embodiment, a method of managing parental controls includes providing a first entertainment device, providing a first set of parental control settings associated with the first entertainment device; providing a second entertainment device; transmitting the first set of parental control settings from the first entertainment device to the second entertainment device; and implementing the first set of parental control settings in the second entertainment device.

Embodiments of the invention will hereinafter be described, by way of example, with reference to the accompanying drawings, in which:
FIG. 1 schematically depicts an environment with multiple entertainment devices; and
FIG. 2 schematically depicts the communication of parental controls from one entertainment device to a second entertainment device.

The various embodiments described herein generally relate to systems and methods for providing consistent parental control settings or policies in multiple entertainment devices by communicating parental control settings from one device to another. In this regard, the following detailed description is merely exemplary in nature and is not intended to limit the described embodiments or the application and uses of the described embodiments.

In the interest of conciseness, conventional techniques, structures, and principles known by those skilled in the art may not be described herein, including, for example, those relating to digital television operation, data communication, and the like. For simplicity and clarity of illustration, the drawing figures depict the general structure and/or manner of construction of the various embodiments. Descriptions and details of well-known features and techniques may be omitted to avoid unnecessarily obscuring other features. Elements in the drawings figures are not necessarily drawn to scale, and thus the dimensions of some features may be exaggerated relative to other elements to improve understanding of the example embodiments.

Terms of enumeration such as "first," "second," "third," and the like may be used for distinguishing between similar elements and not necessarily for describing a particular spatial or chronological order. These terms, so used, are interchangeable under appropriate circumstances. Unless expressly stated otherwise, "connected" or "connecting" means that one element/node/feature is directly joined to (or directly communicates with) another element/node/feature, but not necessarily mechanically. Likewise, "coupled" or "coupling" means that one element, node, or feature is directly or indirectly joined to (or directly or indirectly communicates with) another element, node, or feature, but not necessarily mechanically. The terms "comprise," "comprising," "include," "have" and any variations thereof are used synonymously to denote non-exclusive inclusion. The terms "left," right," "in," "out," "front," "back," "up," "down," and other such directional terms are used to describe relative positions, not necessarily absolute positions in space. The term "exemplary" is used in the sense of "example," rather than "ideal."

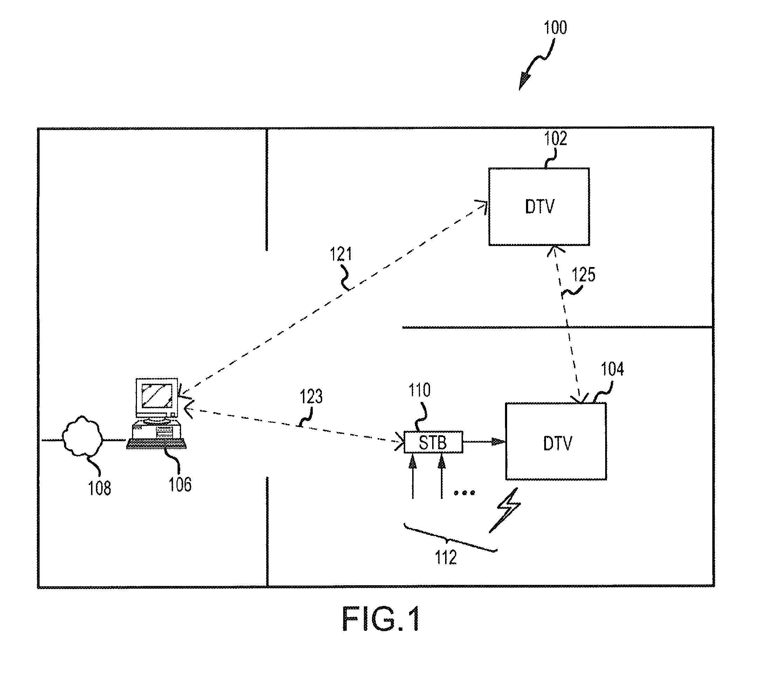

FIG. 1 depicts an example environment 100 - in this case, the floorplan of a house -- useful in describing the present invention. As shown, environment 100 includes three entertainment devices (or simply "devices") 102, 104, and 106. In this example, entertainment devices 102 and 104 are illustrated as digital televisions (DTVs), and entertainment device 106 is illustrated as a media center personal computer (or simply "PC"). The term "DTV" may be used herein, without loss of generality, to refer to a particular device.

In this embodiment, DTV 104 is illustrated as coupled to a set-top box (STB) 110, as is known in the art, while DTV 102 is not. Thus, DTV 104 receives its programming from STB 110, which itself receives programming, in various formats, from broadcast signals 112. These broadcast signals may include, for example, HDTV signals, digital cable signals, analog television signals, terrestrial broadcast signals, and the like. DTV 102, as illustrated, receives programming from PC 106 through a suitable network connection. Many other components may typically be included in such an environment 100, including digital video recorders, image processors, audio receivers, surround-sound hardware, etc.

DTV 102, DTV 104, and PC 106 may communicate with each other through any suitable data communication method (designated by dotted lines 121, 123, and 125). Such connections may be wired or wireless. Example wired connections include Ethernet and serial connections. Example wireless connections include WiFi, UPnP, infrared (IR), and the like. Furthermore, the devices may communicate through the television signals themselves. One or more of devices 102, 104, and 106 may also be coupled to a network 108 (e.g., the Internet and/or a local-area network).

Both DTV 102 and DTV 104 are configured to selectively block content based on a set of parental control settings (or simply "settings"), which are typically stored locally in RAM, in a hard-disk, or in any other suitable memory. Television devices typically allow for on-screen programming of these settings via a "guide" feature, where individual shows, ratings, and/or channels are blocked. A variety of such parental control settings and content rating systems are well known in the art, and need not be described in detail herein. In general, however, such systems work by blocking content based on whether the advisory packets within the broadcast signal itself match one or more of the settings stored within the device.

As mentioned above, the parental control settings programmed into or otherwise provided within DTV 102 may not match those of DTV 104. Thus, it is desirable for these settings to be "reconciled" or otherwise modified such that they are substantially equivalent. In accordance with one embodiment, parental control settings in one device (e.g., DTV 104) is communicated to another (e.g., DTV 102). Reconciliation between DTV 102 and DTV 104 may also include an "unlock" status for one or more devices. Alternatively, one device (e.g., DTV 102) may be re-locked from local STB 110 by a user watching DTV 104.

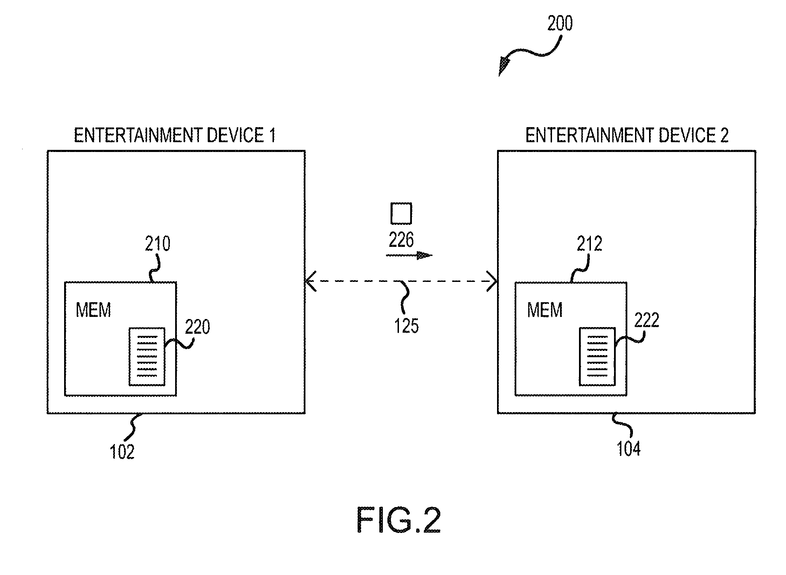

More particularly, referring now to FIG. 2, consider the scenario in which it is desirable to change the parental settings of device 104 such that it more closely matches those of device 102. As shown, devices 102 and 104 each contain a memory (210, 212) and a set of parental control settings stored therein (220, 222). Each device 102, 104 will include numerous other components (not shown) depending upon the nature of the device. For example, in the event that device 102 is a DTV, it will typically include a display screen (e.g., LCD, plasma), a rendered (to create the displayed image), as well as a controller, a v-chip, and various I/O submodules.

Communication is established between the devices through communication link 125, which, as mentioned earlier, may be wired or wireless. The parental control settings 220 is then suitably communicated in a data packet 226 to device 104. This communication may be triggered automatically, or may be initiated by a user. In one embodiment, for example, the user may operate DTV such that a graphical user interface is displayed, allowing the user to initiate the transfer of all or a part of the settings 220. In one embodiment, device 104 periodically advertises its settings to any other device configured to listen to such advertisements.

Data packet 226 may have any suitable format and be communicated through any convenient protocol. For example, packet 226 may include data specifying the advisory status as a whole, or may specify the settings rating-by-rating. The packets may be based on the U.S. FCC rating system (e.g., Consumer Electronics Association standard CEA-766-A), or generalized based on the country of use. In one mode of operation, the user watching device 104 could override the parental control settings in device 102 by copying all or a portion of the settings from device 104 over the network to device 102. Such an override may be enabled a priori by configuration settings in device 102 that prepare it to accept settings from device 104. Alternatively, this function may be enabled by remotely unlocking device 102 before sending new settings. In another embodiment, a user watching device 104 might request the settings from device 102 and copy all or a portion of the settings to device 104 or device 110. In yet another embodiment, before device 110 sends content to device 104, device 110 requests the parental control settings on device 104, receives a response that includes some or all of those settings, and only transmits content that is consistent with the settings on device 104.

Upon receipt of data packet 226, device 104 may modify its own settings 222 within memory 212 such that they are substantially equivalent to settings 220, or may chose to reject all or part of those settings. This decision may be automated, or may be directed by the user in response to a query displayed as part of the graphical user interface. Each device 102 is preferably configured to send as well as receive advertised parental control settings.

Any convenient type of user interface may be used to accomplish the methods set forth above. For example, the salient parameters for parental control understood by device 102 might be presented on device 104, or device 104 might translate those settings into a different form before presenting and settings such parameters.

Thus, as detailed above, it is desirable for one entertainment device to modify its own settings based on the settings received from another device. The mechanism for affecting this change may vary, however, depending upon the operational details of the entertainment device that receives the request.

A particular entertainment device - for example, device 104 -- typically has at least two ways of changing parental control settings. First, the entire state of the parental control settings may be altered. Such a change may be accomplished during a configuration mode, wherein various options and preferences are set for the device, and the device is responsive to a "set state" command. The "set state" command is generally subject to some form of security mechanism - i.e., a password, PIN, or the like. Second, the device may respond to a "temporary unblock" request. Such a request is issued when the user desires to temporarily suspend or override the current parental control settings to watch a particular show or channel. Typically, the unblock state persists until the channel is changed or a more restrictive advisory packet is received. The "temporary unblock" command is also subject to a security mechanism (e.g., a PIN or the like), which is often the same as the security mechanism used for the "set state" command.

Thus, when device 104 receives a parental control modification command, such as a "set state" command or "temporary unblock" command, from device 102 (or from any other entity communicating with device 104 over a network or another input), it may react in a variety of ways, including invoking a security mechanism. In one embodiment, device 104 advertises to device 102 its security mechanism, prompting device 102 to emulate or duplicate this security mechanism. This advertisement might include password information, login information, PIN information, etc. The generator of the parental control modification command may be responsible for whatever level of parental controls needs to be applied to that command (e.g., authentication of the user). When the same or similar security mechanism is used for both the "set state" command and "temporary unblock" command, the "temporary unblock" security mechanism can then be used to validate the "set state" message.

In addition to the actual programming provided by the entertainment device, an "electronic program guide" (EPG) is also typically provided to the user so that he may graphically list and select particular channels and programs. Such EPGs are commonly used, for example, in connection with DTVs, STBs, and satellite radio broadcasts, and include program names, channel names, and the like. It is often the case that the EPG information itself includes text, still images, or other content (generally, "EPG data") that may be objectionable to children.

In accordance with one embodiment, the EPG data itself is blocked consistent with the parental control settings. In one embodiment, alternate graphical elements are used in place of objectional elements (e.g., text or images) present in the blocked EPG data. EPG data may also be filtered by channel based on a channel rating, or based on an event rating.

In accordance with another embodiment, an alternate user interface is provided consistent with the parental control settings. For example, if the parental control settings are set for a general audience or children, the user interface may be likewise set to a "kid friendly" interface such that blocked content is in no way displayed. Ancillary data that has been rated (e.g., images, sounds, video clips) could also be blocked or replaced with alternate graphical elements (e.g., an outline around the area where the blocked data would have appeared).

Alternatively, EPG data is filtered or blocked based on a fixed or user-settable list of keywords. That is, a user may configured the device such that its memory includes a list of objectionable words, phrases, and/or word fragments. When the EPG data includes a word or phrase from this list, the offending word or phrase is consequently blocked from display.

In yet another embodiment, alternate content to replace the blocked data and/or content can be displayed. For example, in the event a blocked program is selected, the device may instead offer an alternate movie, song, image, advertisement, or the like. The alternate content may be selected explicitly, or may be selected automatically based on the nature of the content (e.g., its rating).

## Claims

1. A method for managing parental control information in a first entertainment device (104) which is in communication with a second entertainment device (102) by way of a local area network (108), wherein the first entertainment device (104) has a first set of parental control settings (222) locally stored therein, and the second entertainment device (102) has a second set of parental control settings (220) locally stored therein, and wherein to enable the first set of parental control settings (222) of the first entertainment device to more closely match the second set of parental control settings (220) of the second entertainment device the method comprises:
on receiving a parental control modification command from one of the second or first entertainment devices (102, 104) via the local area network;
causing the other of the first or second entertainment devices (104, 102) to invoke a security mechanism in response to the parental control modification command whereby the parental control modification command is authenticated or unauthenticated; and
if the parental control modification command is authenticated, causing one or other of the entertainment devices (104, 102) to modify the locally stored set of parental control settings (222, 220) to be substantially equivalent to the set of parental control settings (220) locally stored by one of the entertainment devices, whereby both of said first and second entertainment devices (104, 102) are each configured so as to be able to selectively exchange information (226) to modify the parental control settings of the respective other device.

2. A method as claimed in Claim 1, wherein receiving the parental control modification command comprises receiving a "temporary unblock" command which temporarily overrides the set of parental control settings (222) locally stored by the other of the entertainment devices.

3. A method as claimed in Claim 1, wherein receiving the parental control modification command comprises receiving a "set state command" which changes the first set of parental control settings (222) as stored in the first entertainment device (104).

4. A method as claimed in Claim 1, wherein the step of invoking a security mechanism includes causing the first entertainment device (104) to advertise its security mechanism to the second entertainment device (102).

5. A method as claimed in Claim 4, wherein the security mechanism includes providing a predetermined password.

6. A method as claimed in Claim 1, wherein the step of modifying the first set of parental control settings (222) includes modifying a parental control setting associated with the display of electronic program guide (EPG) data.

7. A method as claimed in Claim 6, further including displaying a user interface including the EPG data, wherein the user interface is selected to correspond to the parental control settings.

8. A system for managing parental control information comprising:
a first entertainment device (104) having a first set of parental control settings (222) locally stored therein which are arranged to selectively block content; and
a second entertainment device (102) having a second set of parental control settings (220) locally stored therein which are arranged to selectively block content;
the first and second entertainment devices (102,104) being in communication by way of a local area network (108);
wherein, the system is arranged to enable the first set of parental control settings (222) of the first entertainment device (104) and the second set of parental control settings (220) of the second entertainment device (102) to be more closely matched;
wherein, on receiving a parental control modification command from one of the second or first entertainment devices (102, 104) via the local area network, the other of the second or first entertainment devices (104, 102) is caused to invoke a security mechanism in response to which the parental control modification command is authenticated or unauthenticated; and
wherein, if the parental control modification command is authenticated, the other of the entertainment devices (104, 102) modifies the locally stored set of parental control settings (222, 220) to be substantially equivalent to the set of parental control settings (220) locally stored by the one of the entertainment devices, whereby both of said first and second entertainment devices (104, 102) are each configured so as to be able to selectively exchange information (226) to modify the parental control settings of the respective other device.

9. A system as claimed in Claim 8, wherein the parental control modification command is a "temporary unblock" command which temporarily overrides the set of parental control settings (222) locally stored by the other of the entertainment devices.

10. A system as claimed in Claim 8, wherein the parental control modification command is a "set state command" which changes the first set of parental control settings (222) as stored in the first entertainment device (104).

11. A system as claimed in Claim 8, wherein the first entertainment device (104) is further configured to advertise the security mechanism to the second entertainment device (102).

12. A system as claimed in Claim 11, wherein the security mechanism includes providing a predetermined password.

13. A system as claimed in Claim 8, wherein the first entertainment device (104) is configured to receive the parental control modification command wirelessly.

14. A system as claimed in Claim 8, wherein the first entertainment device (104) is further configured to display electronic program guide (EPG) data substantially equivalent to the modified first set of parental control settings.

15. A system as claimed in Claim 14, wherein the first entertainment device (104) is further configured to display a user interface including the EPG data, wherein the user interface is selected to correspond to the parental control settings.

## Patentansprüche

1. Verfahren zur Verwaltung einer Kindersicherungsinformation in einem ersten Unterhaltungsgerät (104), das mit einem zweiten Unterhaltungsgerät (102) über ein lokales Netzwerk (108) in Kommunikation steht, wobei das erste Unterhaltungsgerät (104) einen ersten Satz von Kindersicherungseinstellungen (222), der darin lokal gespeichert ist, aufweist, und das zweite Unterhaltungsgerät (102) einen zweiten Satz von Kindersicherungseinstellungen (220), der darin lokal gespeichert ist, aufweist, und wobei, um es dem ersten Satz von Kindersicherungseinstellungen (220) des ersten Unterhaltungsgeräts zu ermöglichen, enger mit dem zweiten Satz von Kindersicherungseinstellungen (220) des zweiten Unterhaltungsgeräts zusammenzupassen, das Verfahren umfasst:
bei Empfang eines Kindersicherungsmodifikationskommandos von einem der zweiten oder ersten Unterhaltungsgeräte (102, 104) über das lokale Netzwerk;
Veranlassen des anderen der ersten oder zweiten Unterhaltungsgeräte (104, 102), einen Sicherheitsmechanismus in Antwort auf das Kindersicherungsmodifikationskommando zu aktivieren, wodurch das Kindersicherungsmodifikationskommando authentifiziert oder nicht authentifiziert wird; und, wenn das Kindersicherungsmodifikationskommando authentifiziert wird, Veranlassen des einen oder des anderen der Unterhaltungsgeräte (104, 102), den lokal gespeicherten Satz von Kindersicherungseinstellungen (222, 220) zu modifizieren, um im wesentlichen äquivalent mit dem Satz der Kindersicherungseinstellungen (220) zu sein, der lokal durch eines der Unterhaltungsgeräte gespeichert wird, wodurch sowohl das erste als auch das zweite Unterhaltungsgerät (104, 102) jeweils so konfiguriert sind, um in der Lage zu sein, selektiv Information (226) auszutauschen, um die Kindersicherungseinstellungen des entsprechenden anderen Geräts zu modifzieren.

2. Verfahren nach Anspruch 1, wobei das Empfangen des Kindersicherungsmodifikationskommandos das Empfangen eines "zeitweilig unblockiert"-Kommandos" umfasst, das zeitweilig den Satz von Kindersicherungseinstellungen (222) aufhebt, der lokal durch das andere der Unterhaltungsgeräte gespeichert wird.

3. Verfahren nach Anspruch 1, wobei das Empfangen des Kindersicherungsmodifikationskommandos das Empfangen eines "Satzzustandskommandos" umfasst, welches den ersten Satz von Kindersicherungseinstellungen (222), der in dem ersten Unterhaltungsgerät (104) gespeichert ist, verändert.

4. Verfahren nach Anspruch 1, wobei der Schritt des Aufhebens eines Sicherheitsmechanismus ein Veranlassen des ersten Unterhaltungsgeräts (104) einschließt, seinen Sicherheitsmechanismus gegenüber dem zweiten Unterhaltungsgerät (102) bekanntzugeben.

5. Verfahren nach Anspruch 4, wobei der Sicherheitsmechanismus das Bereitstellen eines vorgegebenen Passworts einschließt.

6. Verfahren nach Anspruch 1, wobei der Schritt des Modifizierens des ersten Satzes von Kindersicherungseinstellungen (222) ein Modifizieren eines Kindersicherungssatzes einschließt, der mit der Anzeige von elektronischen Programmführungsdaten (EPG) assoziiert ist.

7. Verfahren nach Anspruch 6, weiter einschließend ein Anzeigen einer Benutzerschnittstelle, die die EPG-Daten einschließt, wobei die Benutzerschnittstelle ausgewählt wird, um mit den Kindersicherungseinstellungen zu korrespondieren.

8. System zur Verwaltung einer Kindersicherungsinformation, welches umfasst:
ein erstes Unterhaltungsgerät (104) mit einem ersten Satz von darin lokal gespeicherten Kindersicherungseinstellungen (222), die angeordnet sind, um Inhalt selektiv zu blockieren; und
ein zweites Unterhaltungsgerät (102) mit einem zweiten Satz von darin lokal gespeicherten Kindersicherungseinstellungen (220), die angeordnet sind, um Inhalt selektiv zu blockieren;
wobei die ersten und zweiten Unterhaltungsgeräte (102, 104) über ein lokales Netzwerk (108) in Kommunikation stehen;
wobei das System angeordnet ist, um es dem ersten Satz von Kindersicherungseinstellungen (222) des ersten Unterhaltungsgeräts (104) und dem zweiten Satz von Kindersicherungseinstellungen (220) des zweiten Unterhaltungsgeräts (102) zu erlauben, enger zusammenzupassen;
wobei bei Empfang eines Kindersicherungsmodifikationskommandos von einem der zweiten oder ersten Unterhaltungsgeräte (102, 104) über das lokale Netzwerk das andere der zweiten oder ersten Unterhaltungsgeräte (104, 102) veranlasst wird, einen Sicherheitsmechanismus zu aktivieren, in dessen Antwort das Kindersicherungsmodifikationskommando authentifiziert oder nicht authentifiziert wird; und
wobei, wenn das Kindersicherungsmodifikationskommando authentifiziert wird, das andere der Unterhaltungsgeräte (104, 102) den lokal gespeicherten Satz von Kindersicherungseinstellungen (222, 220) modifiziert, um im wesentlichen äquivalent mit dem Satz der Kindersicherungseinstellungen (220), der lokal durch das eine der Unterhaltungsgeräte gespeichert wird, zu sein, wodurch sowohl das erste als auch das zweite Unterhaltungsgerät (104, 102) jeweils so konfiguriert sind, um in der Lage zu sein, selektiv Information (226) auszutauschen, um die Kindersicherungseinstellungen des entsprechenden anderen Geräts zu modifzieren.

9. System nach Anspruch 8, wobei das Kindersicherungsmodifikationskommando ein "zeitweilig unblockiert"-Kommando ist, das zeitweilig den Satz von Kindersicherungseinstellungen (222) aufhebt, der lokal durch das andere der Unterhaltungsgeräte gespeichert wird.

10. System nach Anspruch 8, wobei das Kindersicherungsmodifikationskommando ein "Satzzustandskommando" ist, das den ersten Satz von Kindersicherungseinstellungen (222), wie gespeichert in dem ersten Unterhaltungsgerät (104), ändert.

11. System nach Anspruch 8, wobei das erste Unterhaltungsgerät (104) weiter konfiguriert ist, um den Sicherheitsmechanismus gegenüber dem zweiten Unterhaltungsgerät (102) bekanntzugeben.

12. System nach Anspruch 11, wobei der Sicherheitsmechanismus das Bereitstellen eines vorgegebenen Passworts einschließt.

13. System nach Anspruch 8, wobei das erste Unterhaltungsgerät (104) konfiguriert ist, um das Kindersicherungsmodifikationskommando drahtlos zu empfangen.

14. System nach Anspruch 8, wobei das erste Unterhaltungsgerät (104) ferner konfiguriert ist, um elektronische Programmführungsdaten (EPG), die im wesentlichen äquivalent zu dem modifizierten ersten Satz von Kindersicherungseinstellungen sind, anzuzeigen.

15. System nach Anspruch 14, wobei das erste Unterhaltungsgerät (104) weiter konfiguriert ist, um eine Benutzerschnittstelle einschließend die EPG-Daten anzuzeigen, wobei die Benutzerschnittstelle ausgewählt ist, um zu den Kindersicherungseinstellungen zu korrespondieren.

## Revendications

1. Procédé pour gérer des informations de contrôle parental dans un premier dispositif de divertissement (104) qui est en communication avec un deuxième dispositif de divertissement (102) par le biais d'un réseau local (108), dans lequel le premier dispositif de divertissement (104) a un premier ensemble de réglages de contrôle parental (222) stocké localement à l'intérieur, et le deuxième dispositif de divertissement (102) a un deuxième ensemble de réglages de contrôle parental (220) stocké localement à l'intérieur, et dans lequel pour permettre que le premier ensemble de réglages de contrôle parental (222) du premier dispositif de divertissement ait une correspondance plus étroite avec le deuxième ensemble de réglages de contrôle parental (220) du deuxième dispositif de divertissement, le procédé comprend des étapes pour:
à la réception d'une commande de modification de contrôle parental en provenance d'un parmi le deuxième ou le premier dispositifs de divertissement (102, 104) via le réseau local ;
amener l'autre parmi le premier ou le deuxième dispositifs de divertissement (104, 102) à appeler un mécanisme de sécurité en réponse à la commande de modification de contrôle parental, par lequel la commande de modification de contrôle parental est authentifiée ou non authentifiée; et
si la commande de modification de contrôle parental est authentifiée, amener l'un ou l'autre des dispositifs de divertissement (104, 102) à modifier l'ensemble de réglages de contrôle parental (222, 220) stocké localement pour qu'il soit sensiblement équivalent à l'ensemble de réglages de contrôle parental (220) stocké localement par un des dispositifs de divertissement, par lequel les deux desdits premier et deuxième dispositifs de divertissement (104, 102) sont chacun configurés afin d'être en mesure d'échanger sélectivement des informations (226) afin de modifier les réglages de contrôle parental de l'autre dispositif respectif.

2. Procédé selon la revendication 1, dans lequel la réception de la commande de modification de contrôle parental comprend la réception d'une commande « déblocage temporaire » qui annule temporairement l'effet de l'ensemble de réglages de contrôle parental (222) stocké localement par l'autre des dispositifs de divertissement.

3. Procédé selon la revendication 1, dans lequel la réception de la commande de modification de contrôle parental comprend la réception d'une commande « détermination d'état » qui change le premier ensemble de réglages de contrôle parental (222) tel que stocké dans le premier dispositif de divertissement (104).

4. Procédé selon la revendication 1, dans lequel l'étape consistant à appeler un mécanisme de sécurité comprend une étape pour amener le premier dispositif de divertissement (104) à annoncer son mécanisme de sécurité au deuxième dispositif de divertissement (102).

5. Procédé selon la revendication 4, dans lequel le mécanisme de sécurité comprend la fourniture d'un mot de passe prédéterminé.

6. Procédé selon la revendication 1, dans lequel l'étape pour modifier le premier ensemble de réglages de contrôle parental (222) comprend la modification d'un réglage de contrôle parental associé à l'affichage de données de guide électronique de programme (EPG).

7. Procédé selon la revendication 6, comprenant en outre l'affichage d'une interface utilisateur comprenant les données EPG, dans lequel l'interface utilisateur est sélectionnée pour correspondre aux réglages de contrôle parental.

8. Système pour gérer des informations de contrôle parental comprenant:
un premier dispositif de divertissement (104) ayant un premier ensemble de réglages de contrôle parental (222) stocké localement à l'intérieur qui sont agencés pour bloquer sélectivement un contenu ; et
un deuxième dispositif de divertissement (102) ayant un deuxième ensemble de réglages de contrôle parental (220) stocké localement à l'intérieur qui sont agencés pour bloquer sélectivement un contenu ;
les premier et deuxième dispositifs de divertissement (102, 104) étant en communication par le biais d'un réseau local (108) ;
dans lequel le système est agencé pour permettre que le premier ensemble de réglages de contrôle parental (222) du premier dispositif de divertissement (104) et le deuxième ensemble de réglages de contrôle parental (220) du deuxième dispositif de divertissement (102) aient une correspondance plus étroite ;
dans lequel, à la réception d'une commande de modification de contrôle parental en provenance d'un parmi le deuxième ou le premier dispositifs de divertissement (102, 104) via le réseau local, l'autre parmi le deuxième ou le premier dispositifs de divertissement (104, 102) est amené à appeler un mécanisme de sécurité en réponse auquel la commande de modification de contrôle parental est authentifiée ou non authentifiée; et
dans lequel, si la commande de modification de contrôle parental est authentifiée, l'autre parmi les dispositifs de divertissement (104, 102) modifie l'ensemble de réglages de contrôle parental (222, 220) stocké localement pour qu'il soit sensiblement équivalent à l'ensemble de réglages de contrôle parental (220) stocké localement par l'un des dispositifs de divertissement, par lequel les deux desdits premier et deuxième dispositifs de divertissement (104, 102) sont chacun configurés afin d'être en mesure d'échanger sélectivement des informations (226) afin de modifier les réglages de contrôle parental de l'autre dispositif respectif.

9. Système selon la revendication 8, dans lequel la commande de modification de contrôle parental est une commande « déblocage temporaire » qui annule temporairement l'effet de l'ensemble de réglages de contrôle parental (222) stocké localement par l'autre parmi les dispositifs de divertissement.

10. Système selon la revendication 8, dans lequel la commande de modification de contrôle parental est une commande « détermination d'état » qui change le premier ensemble de réglages de contrôle parental (222) tel que stocké dans le premier dispositif de divertissement (104).

11. Système selon la revendication 8, dans lequel le premier dispositif de divertissement (104) est en outre configuré pour annoncer le mécanisme de sécurité au deuxième dispositif de divertissement (102).

12. Système selon la revendication 11, dans lequel le mécanisme de sécurité comprend la fourniture d'un mot de passe prédéterminé.

13. Système selon la revendication 8, dans lequel le premier dispositif de divertissement (104) est configuré pour recevoir la commande de modification de contrôle parental de manière sans fil.

14. Système selon la revendication 8, dans lequel le premier dispositif de divertissement (104) est en outre configuré pour afficher des données de guide électronique de programme (EPG) sensiblement équivalentes au premier ensemble de réglages de contrôle parental modifié.

15. Système selon la revendication 14, dans lequel le premier dispositif de divertissement (104) est en outre configuré pour afficher une interface utilisateur comprenant les données EPG, dans lequel l'interface utilisateur est sélectionnée pour correspondre aux réglages de contrôle parental.
